# EUROPEAN PATENT SPECIFICATION

(11) **EP 2 760 074 B1**
(45) Date of publication and mention of the grant of the patent: **15.11.2017**
(21) Application number: 12834130.2
(22) Date of filing: 19.09.2012
(51) Int. Cl.: H01M 2/02, H01M 2/16, H01M 10/04, H01M 4/13, H01M 4/66, H01M 4/75, H01M 10/052, H01M 10/058, H01M 10/0565

(54) **CABLE-TYPE SECONDARY CELL**
KABELARTIGE SEKUNDÄRZELLE
PILE SECONDAIRE DU TYPE À CÂBLE

(30) Priority: 19.09.2011 KR 20110094225
(43) Date of publication of application: 30.07.2014
(73) Proprietor: LG Chem, Ltd., Seoul 150-721 (KR)
(72) Inventor: KWON, Yo- Han, Daejon 305-741 (JP); KIM,Je-Young, Daejon 305-761 (JP); KIM , KI-Tae, Daejon 305-746 (JP)
(74) Representative: Goddar, Heinz J.
(86) International application number: PCT/KR2012/007500
(87) International publication number: WO 2013/042939

(56) References cited:
- JP-A- 2001 110 244
- JP-A- 2001 110 445
- JP-A- 2009 110 823
- KR-A- 20110 090 768
- KR-Y1- 200 284 163
- KR-Y1- 200 284 163
- US-A1- 2005 123 831
- US-A1- 2008 220 330

## Description

### TECHNICAL FIELD

The present invention relates to a cable-type secondary battery, which can freely change in shape, and more particularly to a cable-type secondary battery having a signal transmitter.

### BACKGROUND ART

Secondary batteries are devices capable of storing energy in chemical form and of converting into electrical energy to generate electricity when needed. The secondary batteries are also referred to as rechargeable batteries because they can be recharged repeatedly. Common secondary batteries include lead accumulators, NiCd batteries, NiMH accumulators, Li-ion batteries, Li-ion polymer batteries, and the like. When compared with disposable primary batteries, not only are the secondary batteries more economically efficient, they are also more environmentally friendly.

Secondary batteries are currently used in applications requiring low electric power, for example, equipment to start vehicles, mobile devices, tools, uninterruptible power supplies, and the like. Recently, as the development of wireless communication technologies has been leading to the popularization of mobile devices and even to the mobilization of many kinds of conventional devices, the demand for secondary batteries has been dramatically increasing. Secondary batteries are also used in environmentally friendly next-generation vehicles such as hybrid vehicles and electric vehicles to reduce the costs and weight and to increase the service life of the vehicles.

Generally, secondary batteries have a cylindrical, prismatic, or pouch shape. This is associated with a fabrication process of the secondary batteries in which an electrode assembly composed of an anode, a cathode, and a separator is mounted in a cylindrical or prismatic metal casing or a pouch-shaped casing of an aluminum laminate sheet, and in which the casing is filled with electrolyte. Because a predetermined mounting space for the electrode assembly is necessary in this process, the cylindrical, prismatic or pouch shape of the secondary batteries is a limitation in developing various shapes of mobile devices. Accordingly, there is a need for secondary batteries of a new structure that are easily adaptable in shape.

To fulfill this need, suggestions have been made to develop linear batteries having a very high ratio of length to cross-sectional diameter. Korean Patent No. 0804411 discloses a linear battery comprising a plurality of anodes and a plurality of cathodes with separators interposed therebetween. Such a linear battery may be applied in signal transferring units such as earphones. For example, Japan Patent Application Publication No. 2001-110244 discloses a battery cable having a cable for transmitting signals. However, since earphones are sensitive to the signal interference due to electromagnetic fields, the battery cable having a cable for transmitting signals may cause a noise due to the electromagnetic interference of a linear battery.

JP 2001110445 A discloses a cable-type secondary battery having an electrode assembly comprising an inner current collector, an inner electrode active material layer, a separation layer, an outer electrode active material layer, and an outer current collector; a signal transmitter arranged parallel to the electrode assembly and a protection coating surrounding the electrode assembly and the signal transmitter.

KR 200284163 Y1 discloses a mobile phone device equipped with a cable for transmitting a signal to its earphones, wherein the cable comprises a core and shield, wherein it is the technical effect of this shield to prevent electromagnetic interference from the mobile phone onto the earphones.

US 2005/123831 A1 discloses polymeric materials to be used as electronic conducting materials in primary or secondary battery, wherein a conducting polyaniline is coated on the surface of a polypropylene substrate, wherein such a material would have high flexibility and would be suitable for electrical contactors.

US 2008/220330 A1 discloses conductive polymeric materials based on polyacytelene, polyaniline, polypyrrol, polythiophene or mixtures thereof to be used as collectors in batteries, wherein these materials exhibit high flexibility.

KR 20110090768 A discloses a cable-type secondary battery comprising an inner electrode with at least two anodes as first electrodes each having an inner collector and active material layer in contact with the electrolyte, wherein a capacity balance between the inner and the outer electrodes may be achieved by adjusting the number of the inner electrodes.

### DISCLOSURE

### Technical Problem

The present invention is designed to solve the problems of the prior art, and therefore it is an object of the present invention to provide a cable-type secondary battery having a signal transmitter capable of preventing noise occurrence by electromagnetic interference.

### Technical Solution

In order to achieve the objects, the present invention provides a a cable-type secondary battery having a horizontal cross section of a predetermined shape and extending longitudinally, comprising: a power supply consisting of an electrode assembly comprising an inner electrode having an inner current collector and an inner electrode active material layer surrounding the outer surface of the inner current collector; a separation layer surrounding the outer surface of the inner electrode to prevent a short circuit between electrodes; and an outer electrode active material layer surrounding the outer surface of the separation layer and an outer current collector surrounding the outer surface of the outer electrode active material layer, a signal transmitter arranged parallel to the electrode assembly and comprising a core for transmitting a signal, made of a wire; and a protection coating simultaneously surrounding the power supply and the signal transmitter, wherein a shield surrounds the core of the signal transmitter to prevent electromagnetic interference, wherein the shield for preventing electromagnetic interference consists of a non-conductor shield for preventing electromagnetic interference, and a conductor shield for preventing electromagnetic interference, formed on the top of the non-conductor shield for preventing electromagnetic interference, wherein the non-conductor shield for preventing electromagnetic interference is made of a flexible polymer, and the conductor shield for preventing electromagnetic interference is formed with a carbon paste.

In the present invention, the inner current collector and the outer current collector are not particularly limited to their kinds, but are preferably made of stainless steel, aluminum, nickel, titanium, sintered carbon, or copper; stainless steel treated with carbon, nickel, titanium or silver on the surface thereof; an aluminum-cadmium alloy; a non-conductive polymer treated with a conductive material on the surface thereof; or a conductive polymer.

Examples of the conductive material which may be used in the present invention include polyacetylene, polyaniline, polypyrrole, polythiophene, polysulfurnitride, indium tin oxide (ITO), silver, palladium, nickel, and mixtures thereof.

In the present invention, the inner electrode may be an anode and the outer electrode may be a cathode, or the inner electrode may be a cathode and the outer electrode may be an anode.

When the inner electrode of the present invention is an anode and the outer electrode is a cathode, the inner electrode active material layer may be made of an active material selected from the group consisting of natural graphite, artificial graphite, or carbonaceous material; lithium-titanium complex oxide (LTO), and metals (Me) including Si, Sn, Li, Zn, Mg, Cd, Ce, Ni and Fe; alloys of the metals; oxides (MeOx) of the metals; complexes of the metals and carbon; and mixtures thereof, and the outer electrode active material layer may be made of an active material selected from the group consisting of LiCoO₂, LiNiO₂, LiMn₂O₄, LiCoPO₄, LiFePO₄, LiNi_{1-x-y-z}CoₓM1_{y}M2_{z}O₂ (wherein M1 and M2 are each independently selected from the group consisting of Al, Ni, Co, Fe, Mn, V, Cr, Ti, W, Ta, Mg and Mo, and x, y and z are each independently an atomic fraction of oxide-forming elements, in which 0 ≤ x < 0.5, 0 ≤ y < 0.5, 0 ≤ z < 0.5, and 0 < x + y + z ≤ 1), and mixtures thereof.

Alternatively, when the inner electrode is a cathode and the outer electrode is an anode, the inner electrode active material layer may be made of an active material selected from the group consisting of LiCoO₂, LiNiO₂, LiMn₂O₄, LiCoPO₄, LiFePO₄, LiNi_{1-x-y-z}CoₓM1_{y}M2_{z}O₂ (wherein M1 and M2 are each independently selected from the group consisting of Al, Ni, Co, Fe, Mn, V, Cr, Ti, W, Ta, Mg and Mo, and x, y and z are each independently an atomic fraction of oxide-forming elements, in which 0 ≤ x < 0.5, 0 ≤ y < 0.5, 0 ≤ z < 0.5, and 0 < x + y + z ≤ 1), and mixtures thereof, and the outer electrode active material layer may be made of an active material selected from the group consisting of natural graphite, artificial graphite, or carbonaceous material; lithium-titanium complex oxide (LTO), and metals (Me) including Si, Sn, Li, Zn, Mg, Cd, Ce, Ni and Fe; alloys of the metals; oxides (MeOx) of the metals; complexes of the metals and carbon; and mixtures thereof, but the present invention is not particularly limited thereto.

In the present invention, the separation layer may be an electrolyte layer or a separator.

The electrolyte layer is not particularly limited to its kinds, but preferably comprises an electrolyte selected from a gel polymer electrolyte using PEO, PVdF, PMMA, PAN, or PVAc; and a solid electrolyte using PEO, polypropylene oxide (PPO), polyether imine (PEI), polyethylene sulphide (PES), or polyvinyl acetate (PVAc). Also, the the electrolyte layer may further comprise a lithium salt, and non-limiting examples of the lithium salt include LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborate, lower aliphatic lithium carbonate, and lithium tetraphenylborate, and mixtures thereof.

When the separation layer is a separator, the cable-type secondary battery of the present invention needs an electrolyte solution, and examples of the separator may include, but is not limited to, a porous substrate made of a polyolefin-based polymer selected from the group consisting of ethylene homopolymers, propylene homopolymers, ethylene-butene copolymers, ethylene-hexene copolymers, and ethylene-methacrylate copolymers; a porous substrate made of a polymer selected from the group consisting of polyesters, polyacetals, polyamides, polycarbonates, polyimides, polyether ether ketones, polyether sulfones, polyphenylene oxides, polyphenylene sulfides and polyethylene naphthalenes; or a porous substrate made of a mixture of inorganic particles and a binder polymer.

The cable-type secondary battery of the present invention may have an inner electrode consisting of multiple electrodes.

Further, the present invention provides a device for transmitting a signal, comprising the above-mentioned cable-type secondary battery as a signal transmitter.

The device for transmitting a signal may be earphones or a speaker cable.

### Advantageous Effects

The cable-type secondary battery according to the present invention has a signal transmitter and a power supply and is used in a device for transmitting a signal, e.g., earphones, to provide a power supply function. Accordingly, a device which is connected to the unit capable of supplying power needs no additional power supply, the miniaturization and lightening thereof can be achieved. Particularly, the cable-type secondary battery according to the present invention has a shield for preventing electromagnetic interference, which can prevent interference due to the occurrence of electromagnetic fields in the power supply, thereby preventing the occurrence of a noise due to interference generated in the signal transmitting process of a device for transmitting a signal.

### DESCRIPTION OF THE DRAWINGS

The accompanying drawings illustrate preferred embodiments of the present invention and, together with the foregoing disclosure, serve to provide further understanding of the technical spirit of the present invention. However, the present invention is not to be construed as being limited to the drawings.
FIG. 1 shows a cross-section of a cable-type secondary battery according to a preferred embodiment of the present invention.
FIG. 2 shows a cross-section of a cable-type secondary battery having multiple inner electrodes according to a preferred embodiment of the present invention.
FIG. 3 shows earphones according to a preferred embodiment of the present invention.

### BEST MODE

Hereinafter, the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

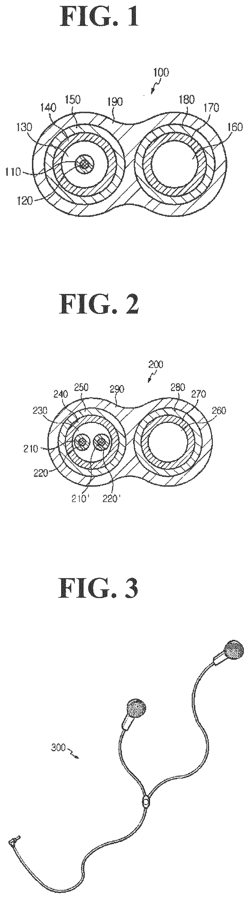

FIG. 1 shows a cross-section of a cable-type secondary battery according to a preferred embodiment of the present invention. However, the configurations illustrated in the drawings and the embodiments are just preferable examples for the purpose of illustrations only, not intended to limit the scope of the disclosure, so it should be understood that other equivalents and modifications could be made thereto within the scope of the disclosure, as defined by the claims.

Referring to FIG. 1, a cable-type secondary battery 100 of the present invention has a horizontal cross section of a predetermined shape and extending longitudinally, and comprises an electrode assembly comprising an inner electrode having an inner current collector 110 and an inner electrode active material layer 120 surrounding the outer surface of the inner current collector; a separation layer 130 surrounding the outer surface of the inner electrode to prevent a short circuit between electrodes; and an outer electrode active material layer 140 surrounding the outer surface of the separation layer and an outer current collector 150 surrounding the outer surface of the outer electrode active material layer, a signal transmitter arranged parallel to the electrode assembly and comprising a core 160 for transmitting a signal, made of a wire; and shields surrounding the core to prevent electromagnetic interference, i.e., a non-conductor shield 170 for preventing electromagnetic interference and a conductor shield 180 for preventing electromagnetic interference, and a protection coating 190 simultaneously surrounding the electrode assembly and the signal transmitter.

The cable-type secondary battery 100 of the present invention is characterized in that a signal transmitter is integrated in the cable-type secondary battery and a power supply consisting of an electrode assembly are integrated therein, and is used in a device for transmitting a signal, e.g., earphones, to provide a power supply function to the device.

Accordingly, a device, e.g., a cellular phone and MP3, which is connected to such a device for transmitting a signal, having a power supply, needs no additional power supply, and thus the miniaturization and lightening thereof can be achieved.

Also, since the cable-type secondary battery 100 of the present invention has the shield for preventing electromagnetic interference, consisting of the non-conductor shield 170 for preventing electromagnetic interference and the conductor shield 180 for preventing electromagnetic interference, it can prevent interference due to the occurrence of electromagnetic fields in the power supply consisting of the electrode assembly, thereby preventing the occurrence of a noise due to interference generated in the signal transmitting process of a device for transmitting a signal.

The shield for preventing electromagnetic interference is not particularly limited to its configuration if it is configured to be capable of preventing electromagnetic interference. For example, the shield may comprise two layers of shields for preventing electromagnetic interference. In this case, it is preferred that the shield 170 for preventing electromagnetic interference, which is in direct contact with the core 160 for transmitting a signal, is a non-conductor, and the shield 180 for preventing electromagnetic interference formed on the top of the shield 170 is a conductor. The non-conductor shield 170 for preventing electromagnetic interference may prevent the core 160 for transmitting a signal from being in direct contact with the conductor shield 180 for preventing electromagnetic interference, and the conductor shield 180 for preventing electromagnetic interference may interrupt electromagnetic fields generated in the power supply, thereby preventing the interference of signal transmittance.

The non-conductor shield 170 for preventing electromagnetic interference is made of a flexible polymer to lead to no deterioration of the flexibility of the cable-type secondary battery 100.

In order to avoid flexibility deterioration, the conductor shield 180 for preventing electromagnetic interference used in the present invention is formed with a carbon paste.

The current collector is preferably made of stainless steel, aluminum, nickel, titanium, sintered carbon, or copper; stainless steel treated with carbon, nickel, titanium or silver on the surface thereof; an aluminum-cadmium alloy; a non-conductive polymer treated with a conductive material on the surface thereof; or a conductive polymer.

The current collector serves to collect electrons generated by electrochemical reaction of the active material or to supply electrons required for the electrochemical reaction. In general, the current collector is made of a metal such as copper or aluminum. Especially, when the current collector is made of a non-conductive polymer treated with a conductive material on the surface thereof or a conductive polymer, the current collector has a relatively higher flexibility than the current collector made of a metal such as copper or aluminum. Also, a polymer current collector may be used instead of the metal current collector to reduce the weight of the battery.

The conductive material may include polyacetylene, polyaniline, polypyrrole, polythiophene, polysulfurnitride, indium tin oxide (ITO), copper, silver, palladium, nickel, etc. The conductive polymer may include polyacetylene, polyaniline, polypyrrole, polythiophene, polysulfurnitride, etc. However, the non-conductive polymer used for the current collector is not particularly limited to its kinds.

The inner electrode may be an anode and the outer electrode may be a cathode. Alternatively, the inner electrode may be a cathode and the outer electrode may be an anode.

In the present invention, the electrode active material layer allows ions to move through the current collector, and the movement of ions is caused by the interaction of ions such as intercalation/deintercalation of ions into and from the electrolyte layer. Such an electrode active material layer may be divided into an anode active material layer and a cathode active material layer.

Specifically, when the inner electrode is an anode and the outer electrode is a cathode, the inner electrode active material layer becomes an anode active material layer and may be made of an active material selected from the group consisting of natural graphite, artificial graphite, or carbonaceous material; lithium-titanium complex oxide (LTO), and metals (Me) including Si, Sn, Li, Zn, Mg, Cd, Ce, Ni and Fe; alloys of the metals; oxides (MeOx) of the metals; complexes of the metals and carbon; and mixtures thereof, and the outer electrode active material layer becomes a cathode active material layer and may be made of an active material selected from the group consisting of LiCoO₂, LiNiO₂, LiMn₂O₄, LiCoPO₄, LiFePO₄, LiNi_{1-x-y-z}CoₓM1_{y}M2_{z}O₂ (wherein M1 and M2 are each independently selected from the group consisting of Al, Ni, Co, Fe, Mn, V, Cr, Ti, W, Ta, Mg and Mo, and x, y and z are each independently an atomic fraction of oxide-forming elements, in which 0 ≤ x < 0.5, 0 ≤ y < 0.5, 0 ≤ z < 0.5, and 0 < x + y + z ≤ 1), and mixtures thereof.

Alternatively, when the inner electrode is a cathode and the outer electrode is an anode, the inner electrode active material layer becomes a cathode active material layer and the outer electrode active material layer becomes an anode active material layer.

The separation layer of the present invention may be an electrolyte layer or a separator.

The electrolyte layer serving as an ion channel may be made of a gel-type polymer electrolyte using PEO, PVdF, PMMA, PAN or PVAC, or a solid electrolyte using PEO, polypropylene oxide (PPO), polyethylene imine (PEI), polyethylene sulfide (PES) or polyvinyl acetate (PVAc). The matrix of the solid electrolyte is preferably formed using a polymer or a ceramic glass as the backbone. In the case of the typical polymer electrolytes, the ions move very slowly in terms of reaction rate, even when the ionic conductivity is satisfied. Thus, the gel-type polymer electrolyte which facilitates the movement of ions is preferably used compared to the solid electrolyte. The gel-type polymer electrolyte has poor mechanical properties and thus may comprise a porous support or a cross-linked polymer to improve the poor mechanical properties. The electrolyte layer of the present invention can serve as a separator, and thus an additional separator may be omitted.

The electrolyte layer of the present invention may further comprise a lithium salt. The lithium salt can improve an ionic conductivity and response time. Non-limiting examples of the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborate, lower aliphatic lithium carbonate, and lithium tetraphenylborate.

As the separation layer, when a separator is used, the cable-type secondary battery of the present invention needs an electrolyte solution, and examples of the separator may include, but is not limited to, a porous substrate made of a polyolefin-based polymer selected from the group consisting of ethylene homopolymers, propylene homopolymers, ethylene-butene copolymers, ethylene-hexene copolymers, and ethylene-methacrylate copolymers; a porous substrate made of a polymer selected from the group consisting of polyesters, polyacetals, polyamides, polycarbonates, polyimides, polyether ether ketones, polyether sulfones, polyphenylene oxides, polyphenylene sulfides and polyethylene naphthalenes; or a porous substrate made of a mixture of inorganic particles and a binder polymer. Among these, the porous substrate made of a polyolefin-based polymer, and the porous substrate made of a polymer selected from the group consisting of polyesters, polyacetals, polyamides, polycarbonates, polyimides, polyether ether ketones, polyether sulfones, polyphenylene oxides, polyphenylene sulfides and polyethylene naphthalenes are preferably in the form of a non-woven fabric.

Also, the cable-type secondary battery of the present invention has a protection coating. The protection coating is an insulator and is formed to surround the outer current collector, thereby protecting the electrodes against moisture in the air and external impacts. The protection coating may be made of conventional polymer resins, for example, PVC, HDPE or epoxy resins.

The cable-type secondary battery having a signal transmitter according to the present invention can be used in a device for transmitting a signal, such as earphones or a speaker cable (a wire connected to an external sound output device to carry a signal therefrom) (*See* FIG. 3), and the use of such a cable-type secondary battery can provide a power supply function to the device.

A cable-type secondary battery according to one embodiment of the present invention and the manufacture thereof will be briefly explained with reference to FIG. 1.

A cable-type secondary battery 100 according to one embodiment of the present invention has a horizontal cross section of a predetermined shape and extending longitudinally, and comprises an electrode assembly comprising an inner electrode having an inner current collector 110 and an inner electrode active material layer 120 surrounding the outer surface of the inner current collector; a separation layer 130 surrounding the outer surface of the inner electrode to prevent a short circuit between electrodes; and an outer electrode active material layer 140 surrounding the outer surface of the separation layer and an outer current collector 150 surrounding the outer surface of the outer electrode active material layer, and a signal transmitter comprising a core 160 for transmitting a signal, made of a wire; and a shield surrounding the core to prevent electromagnetic interference, wherein the shield consists of two layers of a non-conductor shield 170 for preventing electromagnetic interference and a conductor shield 180 for preventing electromagnetic interference. Also, in the cable-type secondary battery 100 according to one embodiment, the signal transmitter is arranged parallel to the electrode assembly, and the cable-type secondary battery 100 comprises a protection coating 190 simultaneously surrounding the electrode assembly and the signal transmitter.

For the manufacture of the cable-type secondary battery 100, first, the inner current collector 110 having a linear wire form is prepared, and the inner electrode active material layer 120 is coated thereon. The coating may be carried out by various conventional methods, for example, by an electroplating process or an anodic oxidation process. Also, in order to maintain constant intervals, an electrode slurry containing an active material may be discontinuously applied by way of an extrusion-coating using an extruder. In addition, the electrode slurry containing an active material may be applied by way of dip coating, as well as the extrusion-coating using an extruder.

Subsequently, the separation layer 130 as an electrolyte layer is formed to surround the inner electrode active material layer 120. The method for forming separation layer 130 as an electrolyte layer is not particularly limited, but an extrusion coating method is preferably used to facilitate the manufacturing process due to the nature of the linear cable-type secondary battery.

On the outer surface of the separation layer 130 formed by the coating of an electrolyte, the outer electrode active material layer 140 is formed by way of coating. The coating method of the inner electrode active material layer 120 may be identically applied to the outer electrode active material layer 140.

Then, on the outer surface of the outer electrode active material layer 140, the outer current collector 150 in the form of a pipe is formed to prepare the electrode assembly. The core 160 for transmitting a signal is prepared by a general method, and then the shield for preventing electromagnetic interference, which consists of the non-conductor shield 170 for preventing electromagnetic interference and the conductor shield 180 for preventing electromagnetic interference, formed on the non-conductor shield, is formed on the outer surface of the core 160 for transmitting a signal to prepare the signal transmitter.

Finally, the electrode assembly and the signal transmitter are arranged in parallel to each other, and then the protection coating 190 is formed to surround the both. The protection coating 190 is an insulator and is formed on the outermost surface for the purpose of protecting the electrodes against moisture in the air and external impacts, by using PVC, HDPE or epoxy resins.

A cable-type secondary battery according to another embodiment of the present invention and the manufacture thereof will be briefly explained with reference to FIG. 2.

Referring to FIG. 2, a cable-type secondary battery 200 according to the present invention comprises an electrode assembly comprising an inner electrode in which two or more of first electrodes are arranged parallel to each other, the first electrodes having an inner current collector 210, 210' and an inner electrode active material layer 220, 220' surrounding the outer surface of the inner current collector 210, 210'; a separation layer 230 surrounding the outer surface of the inner electrode to prevent a short circuit between electrodes; and an outer electrode active material layer 240 surrounding the outer surface of the separation layer 230 and an outer current collector 250 surrounding the outer surface of the outer electrode active material layer 240, a signal transmitter arranged parallel to the electrode assembly and comprising a core 260 for transmitting a signal, made of a wire; and a non-conductor shield 270 for preventing electromagnetic interference and a conductor shield 280 for preventing electromagnetic interference which are formed to surround the core, and a protection coating 290 formed to simultaneously surround the electrode assembly and the signal transmitter. Such a cable-type secondary battery 200 has the inner electrode consisting of multiple electrodes, thereby allowing to control the balance between a cathode and anode and prevent a short circuit.

### <Explanation of Reference Numerals>

- 100, 200:: Cable-type Secondary Battery
- 110, 210, 210':: Inner Current Collector
- 120, 220, 220':: Inner Electrode Active Material Layer
- 130, 230:: Separation Layer
- 140, 240:: Outer Electrode Active Material Layer
- 150, 250:: Outer Current Collector
- 160, 260:: Core for Transmitting Signal
- 170, 270:: Non-conductor Shield for Preventing Electromagnetic Interference
- 180, 280:: Conductor Shield for Preventing Electromagnetic Interference
- 190,290:: Protection Coating
- 300:: Earphones

## Claims

1. A cable-type secondary battery (100) having a horizontal cross section of a predetermined shape and extending longitudinally, comprising:
a power supply consisting of an electrode assembly comprising an inner electrode having an inner current collector (110) and an inner electrode active material layer (120) surrounding the outer surface of the inner current collector; a separation layer (130) surrounding the outer surface of the inner electrode to prevent a short circuit between electrodes; and an outer electrode active material layer (140) surrounding the outer surface of the separation layer and an outer current collector (150) surrounding the outer surface of the outer electrode active material layer,
a signal transmitter arranged parallel to the electrode assembly and comprising a core (160) for transmitting a signal, made of a wire; and
a protection coating (190) simultaneously surrounding the power supply and the signal transmitter, **characterized by** a shield surrounding the core of the signal transmitter to prevent electromagnetic interference,
wherein the shield for preventing electromagnetic interference consists of a non-conductor shield (170) for preventing electromagnetic interference, and a conductor shield (180) for preventing electromagnetic interference, formed on the top of the non-conductor shield for preventing electromagnetic interference, (170)
wherein the non-conductor shield (170) for preventing electromagnetic interference is made of a flexible polymer, and the conductor shield for preventing electromagnetic interference is formed with a carbon paste.

2. The cable-type secondary battery according to claim 1, wherein the inner current collector is made of stainless steel, aluminum, nickel, titanium, sintered carbon, or copper; stainless steel treated with carbon, nickel, titanium or silver on the surface thereof; an aluminum-cadmium alloy; a non-conductive polymer treated with a conductive material on the surface thereof; or a conductive polymer.

3. The cable-type secondary battery according to claim 1, wherein the outer current collector is made of stainless steel, aluminum, nickel, titanium, sintered carbon, or copper; stainless steel treated with carbon, nickel, titanium or silver on the surface thereof; an aluminum-cadmium alloy; a non-conductive polymer treated with a conductive material on the surface thereof; or a conductive polymer.

4. The cable-type secondary battery according to claim 2 or 3, wherein the conductive material is selected from the group consisting of polyacetylene, polyaniline, polypyrrole, polythiophene, polysulfurnitride, indium tin oxide (ITO), silver, palladium, nickel, and mixtures thereof.

5. The cable-type secondary battery according to claim 2, wherein the conductive polymer is selected from the group consisting of polyacetylene, polyaniline, polypyrrole, polythiophene, polysulfurnitride, and mixtures thereof.

6. The cable-type secondary battery according to claim 1, wherein the inner electrode is an anode and the outer electrode is a cathode, or the inner electrode is a cathode and the outer electrode is an anode.

7. The cable-type secondary battery according to claim 1, wherein when the inner electrode is an anode and the outer electrode is a cathode,
the inner electrode active material layer is made of an active material selected from the group consisting of natural graphite, artificial graphite, or carbonaceous material; lithium-titanium complex oxide (LTO), and metals (Me) including Si, Sn, Li, Zn, Mg, Cd, Ce, Ni and Fe; alloys of the metals; oxides (MeOx) of the metals; complexes of the metals and carbon; and mixtures thereof, and
the outer electrode active material layer is made of an active material selected from the group consisting of LiCoO₂, LiNiO₂, LiMn₂O₄, LiCoPO₄, LiFePO₄, LiNi_{1-x-y-z}CoₓM1_{y}M2_{z}O₂ (wherein M1 and M2 are each independently selected from the group consisting of Al, Ni, Co, Fe, Mn, V, Cr, Ti, W, Ta, Mg and Mo, and x, y and z are each independently an atomic fraction of oxide-forming elements, in which 0 ≤ x < 0.5, 0 ≤ y < 0.5, 0 ≤ z < 0.5, and 0<x+y+z≤1), and mixtures thereof.

8. The cable-type secondary battery according to claim 1, wherein when the inner electrode is a cathode and the outer electrode is an anode,
the inner electrode active material layer is made of an active material selected from the group consisting of LiCoO₂, LiNiO₂, LiMn_{z}O₄, LiCoPO₄, LiFePO₄, LiNi_{1-x-y-z}CoₓM1_{y}M2_{z}O₂ (wherein M1 and M2 are each independently selected from the group consisting of Al, Ni, Co, Fe, Mn, V, Cr, Ti, W, Ta, Mg and Mo, and x, y and z are each independently an atomic fraction of oxide-forming elements, in which 0 ≤ x < 0.5,0 ≤ y < 0.5,0 ≤ z < 0.5, and 0<x+y+z≤), and mixtures thereof, and
the outer electrode active material layer is made of an active material selected from the group consisting of natural graphite, artificial graphite, or carbonaceous material; lithium-titanium complex oxide (LTO), and metals (Me) including Si, Sn, Li, Zn, Mg, Cd, Ce, Ni and Fe; alloys of the metals; oxides (MeOx) of the metals; complexes of the metals and carbon; and mixtures thereof.

9. The cable-type secondary battery according to claim 1, wherein the separation layer is an electrolyte layer or a separator.

10. The cable-type secondary battery according to claim 9, wherein the electrolyte layer is made of an electrolyte selected from a gel polymer electrolyte using PEO, PVdF, PMMA, PAN, or PVAc; and a solid electrolyte using PEO, polypropylene oxide (PPO), polyether imine (PEI), polyethylene sulphide (PES), or polyvinyl acetate (PVAc).

11. The cable-type secondary battery according to claim 10, wherein the electrolyte layer further comprises a lithium salt.

12. The cable-type secondary battery according to claim 11, wherein the lithium salt is selected from the group consisting of LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lower aliphatic lithium carbonate, and lithium tetraphenylborate, and mixtures thereof.

13. The cable-type secondary battery according to claim 9, wherein the separator is a porous substrate made of a polyolefin-based polymer selected from the group consisting of ethylene homopolymers, propylene homopolymers, ethylene-butene copolymers, ethylene-hexene copolymers, and ethylene-methacrylate copolymers; a porous substrate made of a polymer selected from the group consisting of polyesters, polyacetals, polyamides, polycarbonates, polyimides, polyether ether ketones, polyether sulfones, polyphenylene oxides, polyphenylene sulfides and polyethylene naphthalenes; or a porous substrate made of a mixture of inorganic particles and a binder polymer.

14. A device for transmitting a signal, comprising the cable-type secondary battery according to any one of claims 1 to 13 as a signal transmitter.

15. The device for transmitting a signal according to claim 14, which is earphones or a speaker cable.

## Patentansprüche

1. Kabelartige Sekundärbatterie (100) mit einem horizontalen Querschnitt einer vorgegebenen Form und sich longitudinal erstreckend, umfassend:
eine Energieversorgung bestehend aus einer Elektrodenanordnung, umfassend eine innere Elektrode mit einem inneren Stromsammler (110) und einer inneren Elektrodenaktivmaterialschicht (120), die die äußere Oberfläche des inneren Stromsammlers umgibt; eine Trennschicht (130), die die äußere Oberfläche der inneren Elektrode umgibt, um einen Kurzschluss zwischen Elektroden zu verhindern; und eine äußere Elektrodenaktivmaterialschicht (140), die die äußere Oberfläche der Trennschicht umgibt, und einen äußeren Stromsammler (150), der die äußere Oberfläche der äußeren Elektrodenaktivmaterialschicht umgibt,
einen Signaltransmitter, der parallel zu der Elektrodenanordnung angeordnet ist und einen Kern (160) zum Übermitteln eines Signals, hergestellt aus einem Draht, umfasst; und
eine Schutzbeschichtung (190), die gleichzeitig die Energieversorgung und den Signaltransmitter umgibt, **gekennzeichnet durch** einen Schild, der den Kern des Signaltransmitters umgibt, um elektromagnetische Interferenz zu verhindern,
wobei der Schild zum Verhindern von elektromagnetischer Interferenz aus einem Nicht-Leiter-Schild (170) zum Verhindern von elektromagnetischer Interferenz und einem Leiter-Schild (180) zum Verhindern von elektromagnetischer Interferenz, gebildet auf der Oberseite des Nicht-Leiter-Schilds zum Verhindern von elektromagnetischer Interferenz besteht,
wobei der Nicht-Leiter-Schild (170) zum Verhindern von elektromagnetischer Interferenz aus einem flexiblen Polymer hergestellt ist, und wobei der Leiter-Schild zum Verhindern von elektromagnetischer Interferenz mit einer Kohlenstoffpaste gebildet ist.

2. Kabelartige Sekundärbatterie nach Anspruch 1, wobei der innere Stromsammler aus rostfreiem Stahl, Aluminium, Nickel, Titan, gesintertem Kohlenstoff oder Kupfer; rostfreiem Stahl, der mit Kohlenstoff, Nickel, Titan oder Silber auf der Oberfläche desselben behandelt ist; einer Aluminium-Cadmium-Legierung; einem nicht-leitfähigen Polymer, das mit einem leitfähigen Material auf der Oberfläche desselben behandelt ist; oder einem leitfähigen Polymer hergestellt ist.

3. Kabelartige Sekundärbatterie nach Anspruch 1, wobei der äußere Stromsammler aus rostfreiem Stahl, Aluminium, Nickel, Titan, gesintertem Kohlenstoff oder Kupfer; rostfreiem Stahl, der mit Kohlenstoff, Nickel, Titan oder Silber auf der Oberfläche desselben behandelt ist; einer Aluminium-Cadmium-Legierung; einem nicht-leitfähigen Polymer, das mit einem leitfähigen Material auf der Oberfläche desselben behandelt ist; oder einem leitfähigen Polymer hergestellt ist.

4. Kabelartige Sekundärbatterie nach Anspruch 2 oder 3, wobei das leitfähige Material ausgewählt ist aus der Gruppe bestehend aus Polyacetylen, Polyanilin, Polypyrrol, Polythiophen, Polyschwefelnitrid, Indium-Zinn-Oixd (ITO), Silber, Palladium, Nickel und Mischungen derselben.

5. Kabelartige Sekundärbatterie nach Anspruch 2, wobei das leitfähige Polymer ausgewählt ist aus der Gruppe bestehend aus Polyacetylen, Polyanilin, Polypyrrol, Polythiophen, Polyschwefelnitrid und Mischungen derselben.

6. Kabelartige Sekundärbatterie nach Anspruch 1, wobei die innere Elektrode eine Anode und die äußere Elektrode eine Kathode ist, oder wobei die innere Elektrode eine Kathode und die äußere Elektrode eine Anode ist.

7. Kabelartige Sekundärbatterie nach Anspruch 1, wobei, wenn die innere Elektrode eine Anode und die äußere Elektrode eine Kathode ist,
die innere Elektrodenaktivmaterialschicht aus einem Aktivmaterial ausgewählt aus der Gruppe bestehend aus natürlichem Graphit, künstlichem Graphit oder kohlenstoffhaltigem Material; Lithium-Titan-Komplex-Oxid (LTO) und Metallen (Me) einschließend Si, Sn, Li, Zn, Mg, Cd, Ce, Ni und Fe; Legierungen der Metalle; Oxiden (MeOx) der Metalle; Komplexen der Metalle und Kohlenstoff; und Mischungen derselben hergestellt ist, und
die äußere Elektrodenaktivmaterialschicht aus einem Aktivmaterial ausgewählt aus der Gruppe bestehend aus LiCoO₂, LiNiO₂, LiMn₂O₄, LiCoPO₄, LiFePO₄, LiNi_{1-x-y-z}CoₓM1_{y}M2_{z}O₂, (wobei M1 und M2 jeweils unabhängig ausgewählt sind aus der Gruppe bestehend aus Al, Ni, Co, Fe, Mn, V, Cr, Ti, W, Ta, Mg und Mo, und wobei x, y und z jeweils unabhängig ein Atombruchteil von Oxid-bildenden Elementen sind, wobei 0 ≤ x < 0,5, 0 ≤ y < 0,5, 0 ≤ z < 0,5 und 0<x+y+z≤1 ist), und Mischungen derselben hergestellt ist.

8. Kabelartige Sekundärbatterie nach Anspruch 1, wobei, wenn die innere Elektrode eine Kathode und die äußere Elektrode eine Anode ist,
die innere Elektrodenaktivmaterialschicht aus einem Aktivmaterial ausgewählt aus der Gruppe bestehend aus LiCoO₂, LiNiO₂, LiMn₂O₄, LiCoPO₄, LiFePO₄, LiNi_{1-x-y-z}CoₓM1_{y}M2_{z}O₂ (wobei M1 und M2 jeweils unabhängig ausgewählt sind aus der Gruppe bestehend aus Al, Ni, Co, Fe, Mn, V, Cr, Ti, W, Ta, Mg und Mo, und wobei x, y und z jeweils unabhängig ein Atombruchteil von Oxid-bildenden Elementen sind, wobei 0 ≤ x < 0,5, 0 ≤ y < 0,5, 0 ≤ z < 0,5 und 0<x+y+z≤1 ist), und Mischungen derselben hergestellt ist, und
die äußere Elektrodenaktivmaterialschicht aus einem Aktivmaterial ausgewählt aus der Gruppe bestehend aus natürlichem Graphit, künstlichem Graphit oder kohlenstoffhaltigem Material; Lithium-Titan-Komplex-Oxid (LTO) und Metallen (Me) einschließend Si, Sn, Li, Zn, Mg, Cd, Ce, Ni und Fe; Legierungen der Metalle; Oxiden (MeOx) der Metalle; Komplexen der Metalle und Kohlenstoff; und Mischungen derselben hergestellt ist.

9. Kabelartige Sekundärbatterie nach Anspruch 1, wobei die Trennschicht eine Elektrolytschicht oder ein Separator ist.

10. Kabelartige Sekundärbatterie nach Anspruch 9, wobei die Elektrolytschicht aus einem Elektrolyten ausgewählt aus einem Gelpolymerelektrolyten unter Verwendung von PEO, PVdF, PMMA, PAN oder PVAc; und einem Festelektrolyten unter Verwendung von PEO, Polypropylenoxid (PPO), Polyetherimin (PEI), Polyethylensulfid (PES) oder Polyvinylacetat (PVAc) hergestellt ist.

11. Kabelartige Sekundärbatterie nach Anspruch 10, wobei die Elektrolytschicht ferner ein Lithiumsalz umfasst.

12. Kabelartige Sekundärbatterie nach Anspruch 11, wobei das Lithiumsalz ausgewählt ist aus der Gruppe bestehend aus LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, Lithiumchlorborat, niederaliphatischem Lithiumcarbonat und Lithiumtetraphenylborat und Mischungen derselben.

13. Kabelartige Sekundärbatterie nach Anspruch 9, wobei der Separator ein poröses Substrat, hergestellt aus einem Polymer auf Polyolefinbasis ausgewählt aus der Gruppe bestehend aus Ethylenhomopolymeren, Propylenhomopolymeren, Ethylen-Buten-Copolymeren, Ethylen-Hexen-Copolymeren und Ethylen-Methacrylat-Copolymeren; ein poröses Substrat hergestellt aus einem Polymer ausgewählt aus der Gruppe bestehend aus Polyestern, Polyacetalen, Polyamiden, Polycarbonaten, Polyimiden, Polyetheretherketonen, Polyethersulfonen, Polyphenylenoxiden, Polyphenylensulfiden und Polyethylennaphthalenen; oder ein poröses Substrat hergestellt aus einer Mischung aus anorganischen Teilchen und einem Bindemittelpolymer ist.

14. Vorrichtung zum Überführen eines Signals, umfassend die kabelartige Sekundärbatterie nach einem der Ansprüche 1 bis 13 als einen Signaltransmitter.

15. Vorrichtung zum Überführen eines Signals nach Anspruch 14, welches Kopfhörer oder ein Sprecherkabel ist.

## Revendications

1. Batterie secondaire du type à câble (100) possédant une section transversale de forme prédéterminée et disposée longitudinalement, comportant:
une alimentation électrique composée d'un ensemble d'électrodes qui comprend une électrode interne possédant un collecteur de courant interne (110) et une couche de matériau actif d'électrode interne (120) qui entoure la surface extérieure du collecteur de courant interne; une couche de séparation (130) qui entoure la surface extérieure de l'électrode interne afin d'empêcher un court-circuit entre les électrodes; ainsi qu'une couche de matériau actif d'électrode externe (140) qui entoure la surface extérieure de la couche de séparation et un collecteur de courant externe (150) qui entoure la surface extérieure du matériau actif d'électrode externe,
un transmetteur de signaux disposé parallèlement à l'ensemble d'électrodes et comportant un noyau (160) qui sert à transmettre un signal, et qui est composé d'un fil; et
une couche de protection (190) entourant simultanément l'alimentation électrique et le transmetteur de signaux, **caractérisée par** un écran qui entoure le noyau du transmetteur de signaux pour empêcher le brouillage électromagnétique,
**caractérisé en ce que** l'écran empêchant le brouillage électromagnétique est un écran non conducteur (170) qui empêche le brouillage électromagnétique, et
un écran conducteur (180) empêchant le brouillage électromagnétique et formé au-dessus de l'écran non conducteur qui empêche le brouillage électromagnétique,
**caractérisé en ce que** l'écran empêchant le brouillage électromagnétique est un écran non conducteur (170) empêchant le brouillage électromagnétique, et un écran conducteur (180) empêchant le brouillage électromagnétique, formé au-dessus de l'écran non conducteur empêchant le brouillage électromagnétique
**caractérisée en ce que** l'écran non conducteur (170) empêchant le brouillage électromagnétique est réalisé en polymère souple, et **en ce que** l'écran conducteur empêchant le brouillage électromagnétique est formé en pâte de carbone.

2. Batterie secondaire du type à câble selon la revendication 1, **caractérisée en ce que** le collecteur de courant interne est réalisé en acier inoxydable, en aluminium, en nickel, en titane, en carbone fritté, ou en cuivre; en acier inoxydable traité à la surface au carbone, au nickel, au titane ou à l'argent ; en alliage d'aluminium-cadmium; en polymère non conducteur traité à la surface par un matériau conducteur; ou bien en polymère conducteur.

3. Batterie secondaire du type à câble selon la revendication 1, **caractérisée en ce que** le collecteur de courant externe est réalisé en acier inoxydable, en aluminium, en nickel, en titane, en carbone fritté, ou en cuivre; en acier inoxydable traité à la surface au carbone, au nickel, au titane ou à l'argent; en alliage d'aluminium-cadmium; en polymère non conducteur traité à la surface par un matériau conducteur; ou bien en polymère conducteur.

4. Batterie secondaire du type à câble selon la revendication 2 ou 3, **caractérisée en ce que** le matériau conducteur est sélectionné dans le groupe composé de polyacétylène, de polyaniline, de polypyrrole, de polythiophène, de polysulfonitrure, d'oxyde d'indium-étain (ITO), d'argent, de palladium, de nickel et de mélanges de ces éléments.

5. Batterie secondaire du type à câble selon la revendication 2, **caractérisée en ce que** le polymère conducteur est sélectionné dans le groupe composé de polyacétylène, de polyaniline, de polypyrrole, de polythiophène, de polysulfonitrure et de mélanges de ces éléments.

6. Batterie secondaire du type à câble selon la revendication 1, **caractérisée en ce que** l'électrode interne est une anode et **en ce que** l'électrode externe est une cathode, ou bien **en ce que** l'électrode interne est une cathode et **en ce que** l'électrode externe est une anode.

7. Batterie secondaire du type à câble selon la revendication 1, **caractérisée en ce que** l'électrode interne est une anode et **en ce que** l'électrode externe est une cathode,
la couche de matériau actif de l'électrode interne est composée d'un matériau actif sélectionné dans le groupe composé de graphite naturel, de graphite artificiel, ou de matériau carboné; d'oxyde complexe de lithium et de titane (LTO), et de métaux (Me) dont les métaux suivants: Si, Sn, Li, Zn, Mg, Cd, Ce, Ni et Fe; d'alliages des métaux; d'oxydes (MeOx) des métaux; de complexes des métaux et de carbone; ou bien de mélanges de ces produits, et
la couche de matériau actif de l'électrode externe est composée d'un matériau actif sélectionné dans le groupe comportant LiCoO₂, LiNiO₂, LiMn₂O₄, LiCoPO₄, LiFePO₄, LiNi_{1-x-y-z}CoₓM1_{y}M2_{z}O₂ (caractérisé en ce pue M1 et M2 sont tous les deux indépendamment sélectionnés dans le groupe composé des métaux suivants: Al, Ni, Co, Fe, Mn, V, Cr, Ti, W, Ta, Mg et Mo, et x, y et z sont chacun indépendamment une fraction atomique d'éléments formant des oxydes, où 0 ≤ x < 0,5 ; 0 ≤ y <0,5 ; 0 ≤ z < 0,5 et 0<x+y+z≤1), ou de mélanges de ces produits.

8. Batterie secondaire du type à câble selon la revendication 1, **caractérisée en ce que** l'électrode interne est une cathode et l'électrode externe est une anode,
la couche de matériau actif de l'électrode interne est composée d'un matériau actif sélectionné dans le groupe comportant LiCoO₂, LiNiO₂, LiMn₂O₄, LiCoPO₄, LiFePO₄, LiNi_{1-x-y-z}CoₓM1_{y}M2_{z}O₂ (caractérisé en ce pue M1 et M2 sont tous les deux indépendamment sélectionnés dans le groupe composé des métaux suivants: Al, Ni, Co, Fe, Mn, V, Cr, Ti, W, Ta, Mg et Mo, et x, y et z sont chacun indépendamment une fraction atomique d'éléments formant des oxydes, où 0 ≤ x < 0,5 ; 0 ≤ y <0,5 ; 0 ≤ z < 0,5 et 0<x+y+z≤1), ou de mélanges de ces produits, et
la couche de matériau actif de l'électrode externe est composée d'un matériau actif sélectionné dans le groupe composé de graphite naturel, de graphite artificiel, ou de matériau carbonacé; d'oxyde complexe de lithium-titane (LTO), et de métaux (Me) y compris les métaux suivants : Si, Sn, Li, Zn, Mg, Cd, Ce, Ni et Fe ; d'alliages des métaux, d'oxydes (MeOx) des métaux ; de complexes des métaux et de carbone ; et aussi de mélanges de ces produits.

9. Batterie secondaire du type à câble selon la revendication 1, **caractérisée en ce que** la couche de séparation est une couche d'électrolyte ou bien un séparateur.

10. Batterie secondaire du type à câble selon la revendication 9, **caractérisée en ce que** la couche d'électrolyte est réalisée en un électrolyte sélectionné à partir d'un électrolytes en gel polymérisé avec usage de PEO, PVdF, PMMA, PAN ou PVAc; et à partir d'un électrolyte solide avec usage de PEO, d'oxyde de polypropylène (PPO), d'imine de polyéther (PEI), de sulfure de polyéthylène (PES), ou d'acétate de polyvinyle (PVAc).

11. Batterie secondaire du type à câble selon la revendication 10, **caractérisée en ce que** la couche d'électrolyte comprend un sel de lithium.

12. Batterie secondaire du type à câble selon la revendication 11, **caractérisée en ce que** le sel de lithium est sélectionné dans le groupe composé des produits suivants: LiCl, LiBr, Lil, LiCLO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborate de lithium, carbonate de lithium aliphatique inférieur, et tétraphénylborate de lithium, ou bien de mélanges de ces produits.

13. Batterie secondaire du type à câble selon la revendication 9, **caractérisée en ce que** le séparateur est un substrat poreux réalisé en un polymère à base de polyoléfine sélectionné dans le groupe composé d'homopolymères d'éthylène, d'homopolymères de propylène, de copolymères d'éthylène-butène, de copolymères d'éthylène-hexène et de copolymères d'éthylène-méthacrylates; un substrat poreux réalisé en polymère sélectionné dans le groupe composé de polyesters, polyacétals, polyamides, polycarbonates, de polyimides, polyéther éther cétones, polyéthersulfones, oxydes de polyphénylène, sulfures de polyphénylène, et naphtalènes de polyéthylène, ou bien un substrat poreux composé d'un mélange de particules inorganique et d'un polymère liant.

14. Dispositif servant à transmettre un signal, comprenant la batterie secondaire du type à câble selon l'une quelconque des revendications 1 à 13 en tant que transmetteur de signaux.

15. Dispositif servant à transmettre un signal selon la revendication 14, qui se présente sous forme d'écouteurs ou de câble de haut-parleur.
